# EUROPÄISCHE PATENTSCHRIFT

(11) **EP 2 159 137 B1**
(45) Veröffentlichungstag und Bekanntmachung des Hinweises auf die Patenterteilung: **15.09.2010**
(21) Anmeldenummer: 09009193.5
(22) Anmeldetag: 15.07.2009
(51) Int. Cl.: B62D 31/02

(54) **Unterbau für Kraftfahrzeuge, insbesondere für Nutzfahrzeuge**
Substructure for motor vehicles, in particular for commercial vehicles
Sous-structure pour véhicules automobiles, notamment pour véhicules utilitaires

(30) Priorität: 29.08.2008 DE 102008045005
(43) Veröffentlichungstag der Anmeldung: 03.03.2010
(73) Patentinhaber: MAN Nutzfahrzeuge AG, 80995 München (DE)
(72) Erfinder: Patejdl, Uwe, 39326 Wolmirstedt (DE); Eberle, Andreas, 80687 München (DE); Vrecko, Alexander, 80993 München (DE)

(56) Entgegenhaltungen:
- EP-A1- 1 067 038
- EP-A1- 1 302 387
- EP-A2- 1 227 032
- EP-A2- 1 318 064
- WO-A1-01/62576
- US-A- 2 606 058

## Beschreibung

Die vorliegende Erfindung betrifft einen Unterbau für Kraftfahrzeuge, insbesondere für Nutzfahrzeuge in Unterfluranordnung, gemäß dem Oberbegriff des Anspruchs 1.

Derartige Kraftfahrzeuge weisen ohne Aufbauten und Ladung extrem ungünstige Achsgewichtsverteilungen auf, die Überführungen oder Prüfabläufe problematisch machen. Um dem vorzubeugen, ist es bekannt, die Achsgewichtsverteilungen des Unterbaus mit zusätzlich anzubringenden Gewichten auf ein erträgliches Maß einzustellen.

Aus der WO 01/62576 A1 ist bereits ein modularer Rahmenaufbau für ein Transportfahrzeug bekannt, der sich aus tragenden Rahmenbaugruppen mit daran angebauten Achsen, einem Antriebsaggregat, einer Lenkeinrichtung und einer Fahrerplatzanordnung zusammensetzt, wobei ein Teil der Rahmenbaugruppen als untereinander austauschbare Module gebildet sind. Damit soll im Rahmen der Endmontage eines Fahrzeugs eine erhöhte Flexibilität dahingehend geschaffen werden, dass unterschiedliche Fahrzeugaufbauten einfacher und schneller umgesetzt und realisiert werden können. Ein beliebiger Verbau der Module ist hier nicht vorgesehen, wobei sich bei dem vorgeschlagenen Aufbau zudem die zuvor genannten Probleme mit der Achsgewichtsverteilung ergeben.

Weiter ist aus der EP 1 302 387 A1 ein modular aufgebautes Fahrgestell für Nutzfahrzeuge bekannt, das einen Tragrahmen mit zwei parallel verlaufenden Längsträgern aufweist und der ein Frontmodul, ein Antriebsmodul, ein Mittenmodul, ein Hinterachsmodul und ein Heckmodul als Tragmodule aufweist. Diese Tragmodule weisen jeweils eine selbsttragende Struktur mit einem nach oben offenen U-förmigen Wangenprofil auf. Jedem Tragmodul ist an jeder Fahrzeugseite wenigstens ein Anbaumodul zugeordnet.

Aufgabe der Erfindung ist es, einen Unterbau für Kraftfahrzeuge, insbesondere für Nutzfahrzeuge bereitzustellen, mit dem ungünstige Achsgewichtsverteilungen einfach und funktionssicher vermieden werden können.

Diese Aufgabe wird mit den Merkmalen des Patentanspruches 1 gelöst. Vorteilhafte und besonders zweckmäßige Weiterbildungen der Erfindung sind Gegenstand der Unteransprüche.

Erfindungsgemäß wird vorgeschlagen, dass die Module einheitliche Schnittstellen aufweisen, über die sie wahlweise, auch um 180° gedreht, miteinander verbindbar sind. Die Schnittstellen können so ausgelegt sein, dass mit wenig Montageaufwand provisorische Schraubverbindungen der Module verwendbar sind, die später zum Beispiel durch zusätzliche Nietverbindungen und/oder Schweißverbindungen in dauerfeste Verbindungen umstellbar sind. Damit gelingt es, den Unterbau bzw. das Chassis zunächst so herzustellen, dass bei wesentlich günstigeren Achsgewichtsverteilungen Prüf- und Montageläufe, Überführungen, etc. durchführbar sind, während vor der Komplettierung des Kraftfahrzeuges mit dem entsprechend dessen Verwendung ausgeführtem Aufbau die ursprüngliche Konzeption wieder hergestellt wird.

In vorteilhafter Weiterbildung der Erfindung wird vorgeschlagen, dass der Unterbau in zumindest drei Module mit jeweils einer oder mehreren Rahmenbaugruppen aufgeteilt ist, die dann zum Beispiel durch Eliminierung großer über die Achsen sich hinaus erstreckender Überstände und einseitiger Gewichtsbelastungen entsprechend veränderbar sind.

Insbesondere können in einer Grundversion des Unterbaus ein erstes Modul mit einem Fahrerplatz und der Lenkeinrichtung, ein zweites Modul mit einer Vorderachse, ein drittes Mittelteil-Modul, ein viertes Modul mit einer Hinterachse und ein fünftes Modul mit einem auf die Hinterachse treibenden Antriebsaggregat aneinander angebaut sein. Die Aufteilung in fünf Module ermöglicht mit adäquaten Freiheitsgraden vorteilhafte Veränderungen der Achsgewichtsverteilungen von der Grundversion in Montageversionen.

Vorwärtsfahrt des Unterbaus nur im geschalteten Rückwärtsgang des Antriebsaggregates (und umgekehrt) möglich ist. Dies stellt aber keinen relevanten Nachteil dar, nachdem die Montageversion ja nur kurzzeitig und mit niedrigen Geschwindigkeiten zu bewegen ist.

In einer weiteren, alternativen Montageversion können das Modul mit der Hinterachse und das Modul mit dem Antriebsaggregat als erstes und zweites Modul verbaut sein, an die das Modul mit dem Fahrerplatz und das Modul mit der Vorderachse anschließen, wobei Hinterachse und Vorderachse funktionell vertauscht sind. Dadurch ist ein Unterbau ohne jeglichen Überhang und mit langem Radstand geschaffen, der wiederum sehr günstige Achsgewichtsverteilungen ergibt. Zu beachten ist allerdings, dass bei dieser Montageversion die gelenkte Vorderachse quasi als Hinterachse verbaut ist, was bei Fahrzeugbewegungen entsprechend zu berücksichtigen ist. Andererseits sind hier Vorwärts- und Rückwärtsfahrt funktionell nicht verändert.

In vorteilhafter Weise können das erste Modul mit dem Fahrerplatz und das zweite Modul mit der Vorderachse unvertauschbar miteinander verbunden oder als ein einheitliches Modul ausgeführt sein, die lediglich wie vorstehend ausgeführt vertauscht oder verdreht montiert werden. Zusätzlich oder alternativ können auch das vierte Modul mit der Hinterachse und das fünfte Modul mit dem Antriebsaggregat unvertauschbar miteinander verbunden oder als ein einheitliches Modul ausgeführt sein.

Mehrere Ausführungsbeispiele der Erfindung sind im folgenden anhand der beiliegenden Skizzen näher erläutert.

Es zeigen:
- Fig. 1: einen Unterbau in einer Unterfluranordnung für ein Nutzkraftfahrzeug, der in fünf über Schnittstellen miteinander fest verbundene Module ausgeteilt ist;
- Fig. 2: den Unterbau gemäß Fig. 1 in einer Montageversion, bei der ein Modul weggelassen ist und die Module mit dem Antriebsaggregat und der Hinterachse um 180 Grad um eine Hochachse gedreht angeordnet sind; und
- Fig. 3: eine weitere, alternative Montageversion des Unterbaus gemäß Fig. 1, bei der das Modul mit dem Fahrerplatz und das Modul mit der Vorderachse hinter dem Modul mit der Hinterachse und hinter dem Modul mit dem Antriebsaggregat verbaut sind.

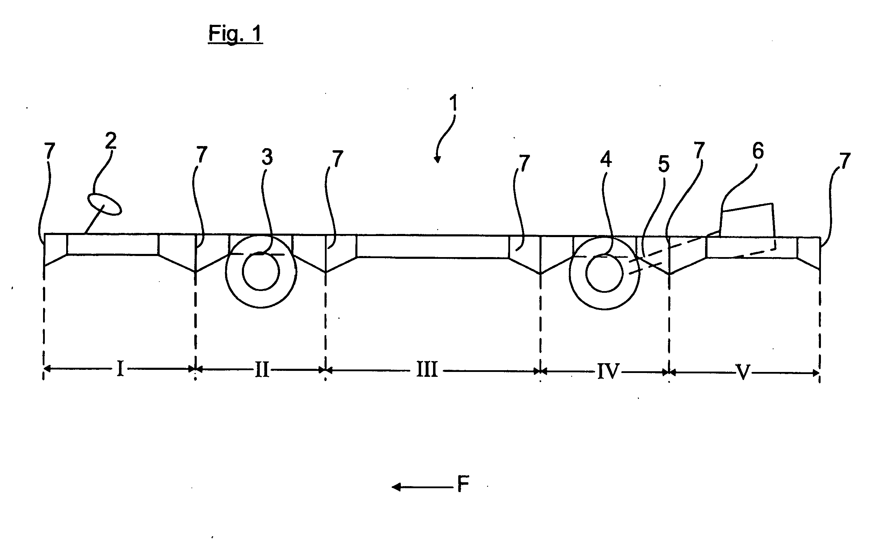

In der Fig. 1 ist grob schematisch ein Unterbau 1 für ein Nutzkraftfahrzeug mit großer Ladefläche (im späteren Aufbau) dargestellt, das sich im Wesentlichen aus fünf tragenden Rahmenbaugruppen bzw. Modulen I bis V zusammensetzt.
Das in Fahrtrichtung F vorne liegende Modul I ist ein Fahrerplatz-Modul, in dem die Lenkeinrichtung mit einem Lenkhandrad 2 und entsprechenden weiteren Einrichtungen angeordnet sind.

Das anschließende Modul II trägt unter anderem die gelenkte Vorderachse 3 des Unterbaus 1, die mit der Lenkeinrichtung des Moduls I entsprechend trieblich verbunden ist.

Das mittlere Modul III bildet ein tragendes Mittelteil, das hauptsächlich der Überführung und dem Hofumlauf mit möglichst kurzem Radstand (Reduzierung der Transportkosten) dient. Dieses Modul wird dann bevorzugt beim Kunden ausgebaut und durch den eigentlichen Rahmen oder das Bodengerippe mit einem entsprechenden Radstand ersetzt. Das Modul wird somit in der Regel vom Kunden nicht mehr verwendet und steht dennoch wieder beim Hersetller zur Verfügung.

Das Modul IV wiederum trägt die Antriebsachse bzw. Hinterachse 4 des Unterbaus 1, die über eine Antriebswelle 5 von einem sich aus einer Brennkraftmaschine und einem Geschwindigkeits-Wechselgetriebe zusammensetzenden Antriebsaggregat 6 angetrieben ist.

Das Antriebsaggregat 6 ist in Unterfluranordnung in das letzte Modul V eingebaut.

Die Module I bis V weisen einheitliche Schnittstellen (allgemein mit 7 bezeichnet) auf, über die sie fest miteinander verbunden sind.

Die nicht näher dargestellten Schnittstellen 7 können Flanschverbindungen und/oder Steckverbindungen, etc. sein, die mittels Befestigungsschrauben, Nietverbindungen, Schweißverbindungen oder dergleichen feste Verbindungen der Module I bis V aneinander sicherstellen.

Die in der Fig. 1 dargestellte Grundversion des Unterbaus 1 weist zur Erzielung großer Ladeflächen bei relativ kurzem Radstand große Überhänge vorne und hinten auf, die insbesondere durch das hinter der Hinterachse 4 im Modul V positionierte Antriebsaggregat 6 eine sehr ungünstige Achsgewichtsverteilung zwischen Vorderachse 3 und Hinterachse 4 ergibt.

Diese ungleiche Achsgewichtsverteilung ist im späteren Fahrbetrieb des Nutzfahrzeuges mit angebautem Aufbau und gegebenenfalls entsprechender Ladung nicht mehr gegeben, kann aber bei Prüf- und Montagefahrten sowie gegebenenfalls bei Überführungen nachteilig sein.

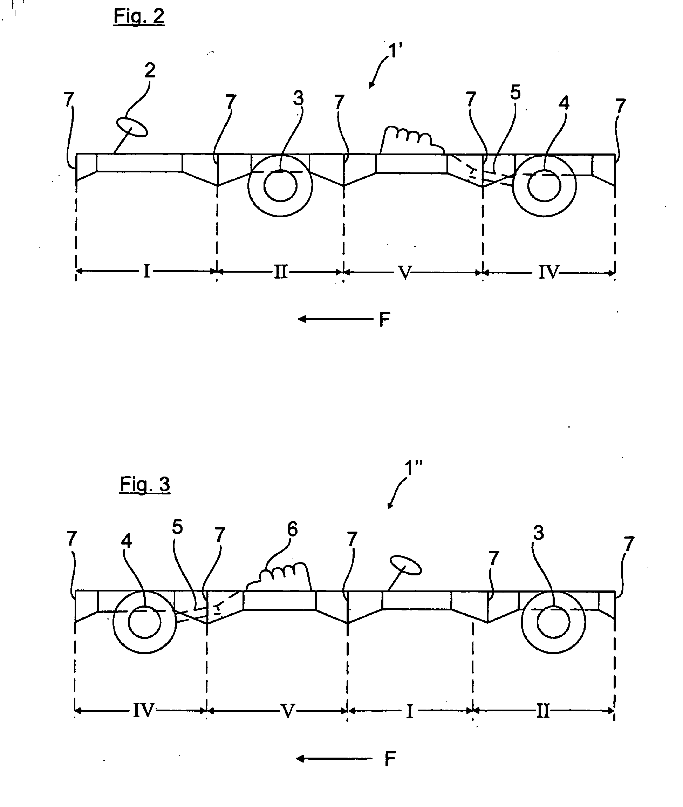

Um dem vorzubeugen, ist der Unterbau 1' gemäß Fig. 2 in einer Montageversion wie folgt aufgebaut:

Zunächst ist das Mittelteil-Modul III weggelassen, um damit unter anderem die Gesamtlänge des Unterbaus 1' zu verringern.

Sodann sind die Module IV und V als Einheit um 180 Grad gedreht verbaut, so dass das Modul V nunmehr in Fahrtrichtung F vor dem Modul IV mit der Hinterachse 4 positioniert ist. Die Module I und II sind unverändert verbaut.

Wie ersichtlich ist dadurch der hintere Überhang an dem Unterbau 1' eliminiert, während das Modul V mit dem Antriebsaggregat 6 nun vor der Hinterachse 4 bzw. zwischen der Vorderachse 3 und der Hinterachse 4 beide Achsen gewichtsbelastet.

Die Schnittstellen 7 der gegenüber der Grundversion Fig. 1 verändert angebauten Module IV und V sind mit lösbaren Schraubverbindungen zunächst so ausgeführt, dass zwar eine ausreichende Festigkeit des Unterbaus 1' gegeben ist, dass diese Schnittstellen 7 aber auch ein schnelles Wechseln der Module IV, V in die spätere Grundversion ermöglichen.

Durch die Drehung der beiden Module IV, V ist das Antriebsaggregat 6 nunmehr von vorne auf die Hinterachse 4 über die Antriebswelle 5 abtreibend angeordnet, wodurch sich die Drehrichtung der Hinterachse 4 umkehrt; das heißt, dass in einem geschalteten Vorwärtsgang des Wechselgetriebes die Antriebsrichtung rückwärts ist und umgekehrt. Der Unterbau 1' ist deshalb nur im Rückwärtsgang in Fahrtrichtung F betreibbar.

Die Fig. 3 zeigt eine alternative Monatageversion 1" des Unterbaus nach Fig. 1, bei der wiederum das Mittelteil-Modul III weggelassen ist und die in Fig. 1 hinteren Module IV, V nach vorne an die ursprüngliche Position der Module I und II verlegt sind.

Die Module I mit der Lenkeinrichtung und II mit der Vorderachse 3 schließen an die Module IV und V entsprechend an. Die Schnittstellen 7 sind wie vorstehend zur Fig. 2 ausgeführt entsprechend aneinander befestigt.

Wie aus Fig. 3 ersichtlich ist, ist bei dieser Montageversion des Unterbaus 1 " ein besonders langer Radstand der Achsen 4 und 3 darstellbar, mit einem zwischen den Achsen 4 und 3 liegendem Antriebsaggregat 6 mit nahezu optimaler Achsgewichtsverteilung. Es ist dabei zu berücksichtigen, dass hier die Vorderachse 3 mit Hinblick auf die eingezeichnete Fahrtrichtung F quasi als gelenkte Hinterachse fungiert.

Sind im Fertigungsablauf des Unterbaus 1' oder 1" die Montageversionen den erforderlichen Prüf- und/oder Montageabläufen oder Rangierbewegungen unterzogen, so werden vor der Vereinigung mit dem Aufbau des Nutzfahrzeuges die verändert angebauten Module I, II, IV, V wieder getrennt und es wird unter Verwendung auch des weggelassenen Mittelteil-Modules III die in Fig. 1 dargestellte Grundversion wieder hergestellt.

Die Fig. 1 bis 3 zeigen nur Ausführungsbeispiele des Unterbaus 1 eines Nutzfahrzeuges mit nur einer Vorderachse 3 und einer Hinterachse 4. Es sind im Rahmen des Erfindungsgedankens aber viele Abwandlungen möglich, die sich für den Fachmann ableiten lassen. Zum Beispiel kann der Unterbau 1 auch mehrere Achsen vorne und/oder hinten aufweisen. Gegebenenfalls sind in der Grundversion gemäß Fig. 1 auch nur drei Module denkbar, zum Beispiel wenn die Module I und II und/oder die Module IV und V als jeweils nur ein Modul ausgeführt sind.

## Patentansprüche

1. Unterbau für Kraftfahrzeuge, insbesondere für Nutzfahrzeuge, der sich aus tragenden Rahmenbaugruppen mit daran angebauten Achsen, einem Antriebsaggregat, einer Lenkeinrichtung und einer Fahrerplatzanordnung zusammensetzt, wobei ein Teil der Rahmenbaugruppen als untereinander austauschbare und/oder unterschiedlich verbaubare, separate Module (I bis V) ausgeführt sind, **dadurch gekennzeichnet, dass** die Module (I bis V) einheitliche Schnittstellen (7) aufweisen, über die sie zur definierten Veränderung der Achsgewichtsverteilung des Unterbaus (1) wahlweise, auch um 180° gedreht, miteinander verbindbar sind.

2. Unterbau nach Anspruch 1, **dadurch gekennzeichnet, dass** der Unterbau (1) in zumindest drei Module (I bis V) mit jeweils einer oder mehreren Rahmenbaugruppen aufgeteilt ist.

3. Unterbau nach einem der vorhergehenden Ansprüche, **dadurch gekennzeichnet, dass** in einer Grundversion (1) ein erstes Modul (I) mit einem Fahrerplatz und der Lenkeinrichtung, ein zweites Modul (II) mit einer Vorderachse (3), ein drittes Mittelteil-Modul (III), ein viertes Modul (IV) mit einer Hinterachse (4) und ein fünftes Modul (V) mit einem auf die Hinterachse (4) treibenden Antriebsaggregat (6) aneinander angebaut sind.

4. Unterbau nach Anspruch 3, **dadurch gekennzeichnet, dass** in Montageversionen (1', 1") das dritte Mittelteil-Modul (III) nicht verbaut ist.

5. Unterbau nach Anspruch 3 oder 4, **dadurch gekennzeichnet, dass** in einer Montageversion (1') das vierte Modul (IV) mit der Hinterachse (4) und das fünfte Modul (V) mit dem Antriebsaggregat (6) gemeinsam um 180 Grad gedreht und direkt an das zweite Modul (II) mit der Vorderachse (3) angebaut sind, so dass die Hinterachse (4) hinter dem Antriebsaggregat (6) positioniert ist.

6. Unterbau nach Anspruch 3 oder 4, **dadurch gekennzeichnet, dass** in einer Montageversion (1") das Modul (IV) mit der Hinterachse (4) und das Modul (V) mit dem Antriebsaggregat (6) als erstes und zweites Modul verbaut sind, an die das Modul (I) mit dem Fahrerplatz und das Modul (II) mit der Vorderachse (3) anschließen, wobei Hinterachse (4) und Vorderachse (3) funktionell vertauscht sind.

7. Unterbau nach einem der Ansprüche 3 bis 6, **dadurch gekennzeichnet, dass** das erste Modul (I) mit dem Fahrerplatz und das zweite Modul (II) mit der Vorderachse (3) unvertauschbar miteinander verbunden oder als ein einheitliches Modul ausgeführt sind.

8. Unterbau nach einem der Ansprüche 3 bis 7, **dadurch gekennzeichnet, dass** das vierte Modul (IV) mit der Hinterachse (4) und das fünfte Modul (V) mit dem Antriebsaggregat (6) unvertauschbar miteinander verbunden sind oder als ein einheitliches Modul ausgeführt sind.

## Claims

1. Substructure for motor vehicles, in particular for commercial vehicles, which is composed of bearing framework assemblies to which axles, a drive unit, a steering device and a driver workplace arrangement are attached, whereby a section of the framework assemblies is designed as separate modules (I to V) that can be interchanged and/or installed in various forms, **characterised in that** the modules (I to V) feature uniform interfaces (7), by means of which interfaces the modules, optionally also rotated around 180°, can be connected to one another to perform a defined change to the axle weight distribution of the substructure (1).

2. Substructure in accordance with claim 1, **characterised in that** the substructure (1) is divided into at least three modules (I to V), with each module having one or several framework assemblies.

3. Substructure in accordance with one of the previous claims, **characterised in that** in a basic version (1), a first module (I) with a driver workplace and the steering device, a second module (II) with a front axle (3), a third centre section module (III), a fourth module (IV) with a rear axle (4) and a fifth module (V) with a drive unit (6) that drives the rear axle (4) are attached to one another.

4. Substructure in accordance with claim 3, **characterised in that** in assembly versions (1', 1"), the third centre section module (III) is not installed.

5. Substructure in accordance with claim 3 or 4, **characterised in that** in an assembly version (1'), the fourth module (IV) with the rear axle (4) and the fifth module (V) with the drive unit (6) are jointly rotated around 180 degrees and directly attached to the second module (II) with the front axle (3) in such a manner that the rear axle (4) is positioned behind the drive unit (6).

6. Substructure in accordance with claim 3 or 4, **characterised in that** in an assembly version (1"), the module (IV) with the rear axle (4) and the module (V) with the drive unit (6) are installed as the first and second module, to which modules the module (I) with the driver workplace and the module (II) with the front axle (3) connect, whereby the rear axle (4) and front axle (3) are interchanged with regard to their function.

7. Substructure in accordance with one of claims 3 to 6, **characterised in that** the first module (I) with the driver workplace and the second module (II) with the front axle (3) are connected to one another so as to be unable to be interchanged or are designed as a standard module.

8. Substructure in accordance with one of claims 3 to 7, **characterised in that** the fourth module (IV) with the rear axle (4) and the fifth module (V) with the drive unit (6) are connected to one other so as to be unable to be interchanged or are designed as a standard module.

## Revendications

1. Soubassement pour véhicules à moteur, en particulier pour véhicules industriels, qui se compose de groupes de construction de cadre porteurs avec des essieux montés dessus, un organe propulseur, un dispositif de direction et un emplacement pour le poste de conduite, auquel cas une partie des groupes de construction du cadre sont exécutés comme modules interchangeables entre eux et/ou montables de manière différente et séparés (I à V), **caractérisé en ce que** les modules (I à V) présentent des interfaces uniformes (7) par le biais desquelles ils peuvent être reliés les uns aux autres pour modifier la répartition des charges sur essieux du soubassement (1) de manière définie, au choix, également tournés de 180°.

2. Soubassement selon la revendication 1, **caractérisé en ce que** le soubassement (1) est subdivisé en au moins trois modules (I à V) avec un ou plusieurs groupes de construction de cadre chacun.

3. Soubassement selon l'une des revendications mentionnées précédemment, **caractérisé en ce que**, dans une version de base (1), un premier module (I) avec un poste de conduite et le dispositif de direction, un deuxième module (II) avec un essieu avant (3), un troisième module de partie centrale (III), un quatrième module (IV) avec un pont arrière (4) et un cinquième module (V) avec un organe propulseur (6) entraînant le pont arrière (4) sont montés de manière reliée les uns aux autres.

4. Soubassement selon la revendication 3, **caractérisé en ce que**, dans des versions de montage (1', 1"), le troisième module de partie centrale (III) n'est pas monté.

5. Soubassement selon la revendication 3 ou 4, **caractérisé en ce que**, dans une version de montage (1'), le quatrième module (IV) avec le pont arrière (4) et le cinquième module (V) avec l'organe propulseur (6) sont montés tournés conjointement de 180° et directement sur le deuxième module (II) avec l'essieu avant (3) de sorte que le pont arrière (4) soit positionné derrière l'organe propulseur (6).

6. Soubassement selon la revendication 3 ou 4, **caractérisé en ce que**, dans une version de montage (1"), le module (IV) avec le pont arrière (4) et le module (V) avec l'organe propulseur (6) sont montés comme premier et deuxième modules auxquels sont reliés le module (I) avec le poste de conduite et le module (II) avec l'essieu avant (3), auquel cas le pont arrière (4) et l'essieu avant (3) sont permutés de manière fonctionnelle.

7. Soubassement selon l'une des revendications 3 à 6, **caractérisé en ce que** le premier module (I) avec le poste de conduite et le deuxième module (II) avec l'essieu avant (3) sont reliés entre eux de manière non-permutable ou sont exécutés comme module commun.

8. Soubassement selon l'une des revendications 3 à 7, **caractérisé en ce que** le quatrième module (IV) avec le pont arrière (4) et le cinquième module (V) avec l'organe propulseur (6) sont reliés entre eux de manière non-permutable ou sont exécutés comme module commun.
